# FASCICULE DE BREVET EUROPEEN

(11) **EP 1 834 222 B1**
(45) Date de publication et mention de la délivrance du brevet: **28.03.2012**
(21) Numéro de dépôt: 05820199.7
(22) Date de dépôt: 19.12.2005
(51) Int. Cl.: G05D 1/00, G08B 3/10

(54) **PROCEDE ET DISPOSITF D'ALERTE SONORE LORS DE LA DESACTIVATION D'UN PILOTE AUTOMATIQUE D'UN AERONEF**
VERFAHREN UND EINRICHTUNG FÜR HÖRBARE WARNUNGEN, WENN EIN FLUGZEUG-AUTOPILOT DEAKTIVIERT WIRD
METHOD AND DEVICE FOR AUDIBLE WARNING WHEN AN AIRCRAFT AUTOPILOT IS DEACTIVATED

(30) Priorité: 03.01.2005 FR 0500008
(43) Date de publication de la demande: 19.09.2007
(73) Titulaire: Airbus Opérations SAS, 31060 Toulouse (FR)
(72) Inventeur: DAVEZE, Fabien, F-31100 Toulouse (FR); RAVIER, Christel, F-31170 Tournefeuille (FR); CAMPAGNE, Pierre, F-31300 Toulouse (FR)
(74) Mandataire: Bonnetat, Christian
(86) Numéro de dépôt international: PCT/EP2005/013642
(87) Numéro de publication internationale: WO 2006/072387

(56) Documents cités:
- GB-A- 897 627
- US-A- 3 683 346
- US-A- 4 237 448
- US-A1- 2003 222 782

## Description

L'invention a pour objet un procédé d'alerte sonore lors de la désactivation d'un pilote automatique d'un aéronef. Elle concerne aussi un aéronef comportant un pilote automatique susceptible d'être désactivé en mettant en oeuvre ce procédé d'alerte sonore. L'invention concerne également un dispositif d'alerte sonore d'un aéronef apte à émettre une alerte sonore lors de la désactivation d'un pilote automatique de cet aéronef, ainsi qu'un aéronef comportant un tel dispositif.

La plupart des aéronefs, notamment les avions de transport civil, comportent un pilote automatique permettant de guider automatiquement l'aéronef sans action du pilote, par exemple pendant les phases de vol de croisière. Le pilote est ainsi déchargé des tâches de pilotage pendant ces phases de vol de croisière qui peuvent durer plusieurs heures sur des vols longs courriers. Lorsqu'il le souhaite, le pilote peut désactiver le pilote automatique afin de reprendre lui-même le pilotage de l'aéronef. Le pilote dispose généralement d'un bouton sur lequel il peut appuyer pour désactiver le pilote automatique. Dans le cas des avions de type Airbus A320, A330, A340... ce bouton est situé sur le mini-manche utilisé pour commander les mouvements de l'avion. Il existe aussi des circonstances où le pilote automatique est désactivé, indépendamment de la volonté du pilote (panne du pilote automatique...) ou sans appui sur le bouton de désactivation du pilote automatique (action sur les pédales du palonnier, action sur le mini-manche...). Dans tous les cas, une alerte est activée dans le cockpit afin d'avertir le pilote de la désactivation du pilote automatique, au cas où cette désactivation serait involontaire on non commandée par le pilote, et serait passée inaperçue. Cette alerte est généralement composée d'alertes visuelles (affichage de messages textuels et activation de voyants lumineux) et d'une alerte sonore.

Toutefois, cette alerte sonore peut perturber le pilote dans ses activités, notamment lorsqu'elle correspond à une désactivation volontaire du pilote automatique sur l'initiative du pilote, par appui sur ledit bouton. Afin d'arrêter l'émission de cette alerte sonore dans le cockpit, le pilote peut l'acquitter en appuyant sur ledit bouton. L'acquittement de cette alerte sonore est donc demandé par le pilote par un second appui sur ce bouton dans le cas d'une désactivation volontaire du pilote automatique ou par un premier appui sur ce même bouton dans le cas d'une désactivation du pilote automatique involontaire ou non commandée par le pilote. Ce mode de fonctionnement présente l'inconvénient qu'en cas de désactivation du pilote automatique résultant d'un double appui involontaire du pilote sur ledit bouton de désactivation du pilote automatique, aucune alerte sonore n'est émise dans le cockpit. Dans un tel cas, le pilote n'a pas conscience de ladite désactivation du pilote automatique, ce qui peut être préjudiciable pour le vol de l'aéronef.

Ces problèmes sont résolus, au moins partiellement, conformément à l'invention, par un procédé d'alerte sonore lors de la désactivation d'un pilote automatique d'un aéronef. Ladite alerte sonore requérant d'être acquittée par un pilote de l'aéronef et comprenant un premier son émis dans le cockpit dudit aéronef, le procédé conforme à la présente invention est remarquable en ce que, si l'acquittement dudit premier son intervient pendant une première durée prédéterminée comptée à partir de ladite désactivation du pilote automatique, l'émission dudit premier son est poursuivie jusqu'à la fin de ladite première durée prédéterminée.

De cette façon, du fait de l'émission du premier son pendant une durée minimale correspondant à ladite première durée prédéterminée, une alerte sonore est émise dans le cockpit quelles que soient les circonstances de la désactivation du pilote automatique, en particulier même si cette désactivation résulte d'un double appui involontaire sur le bouton de désactivation. Cela permet d'améliorer la prise de conscience de cette alerte (et donc de la désactivation du pilote automatique) par les pilotes de l'aéronef.

Avantageusement :
- si l'acquittement dudit premier son intervient après la fin de ladite première durée prédéterminée, mais pendant une deuxième durée prédéterminée, plus longue que ladite première durée prédéterminée et comptée à partir de ladite désactivation du pilote automatique, l'émission dudit premier son est arrêtée sensiblement dès cet acquittement ;
- si l'acquittement dudit premier son n'est pas intervenu avant la fin de la deuxième durée prédéterminée, un second son, dont l'intensité acoustique est supérieure à l'intensité acoustique dudit premier son, est émis dans ledit cockpit ;
- si l'acquittement dudit second son intervient pendant une troisième durée prédéterminée, comptée à partir de la fin de ladite deuxième durée prédéterminée, l'émission dudit second son est poursuivie jusqu'à la fin de ladite troisième durée prédéterminée ; et
- si l'acquittement dudit second son intervient après la fin de la troisième durée prédéterminée, comptée à partir de la fin de ladite deuxième durée prédéterminée, l'émission dudit son est arrêtée sensiblement dès cet acquittement.

De préférence, l'intensité acoustique dudit second son augmente progressivement du niveau de l'intensité acoustique dudit premier son jusqu'à une valeur maximale prédéterminée.

L'invention concerne aussi un aéronef comportant un pilote automatique susceptible d'être désactivé en mettant en oeuvre le procédé d'alerte sonore conforme à la présente invention.

Par ailleurs, on notera que :
- le document GB 897 627 A concerne un appareil de pilotage automatique d'une double gouverne d'aéronef, cet appareil comportant deux instruments de pilotage automatique et un dispositif d'alerte activé lorsqu'il existe une différence entre les signaux émis par lesdits instruments de pilotage automatique ; et
- le document US-A-3 683 346 décrit un système d'alarme électronique anti-intrusion à intensité sonore variable.

L'invention sera mieux comprise à la lecture de la description qui suit et à l'examen des figures annexées. Sur ces figures, des références identiques désignent des éléments semblables :
La figure 1 est un schéma synoptique d'un dispositif d'alerte sonore conforme à l'invention.
La figure 2 est un chronogramme illustrant l'intensité acoustique 1 d'un son émis dans le cockpit de l'aéronef, en fonction du temps t, lors de l'émission d'une alerte sonore consécutive à la désactivation du pilote automatique.
Les figures 3 à 6 représentent des chronogrammes similaires à celui de la figure 2, correspondant à différentes situations d'acquittement de l'alerte sonore.
La figure 7 représente un chronogramme similaire à celui de la figure 2, correspondant à une variante de l'invention.

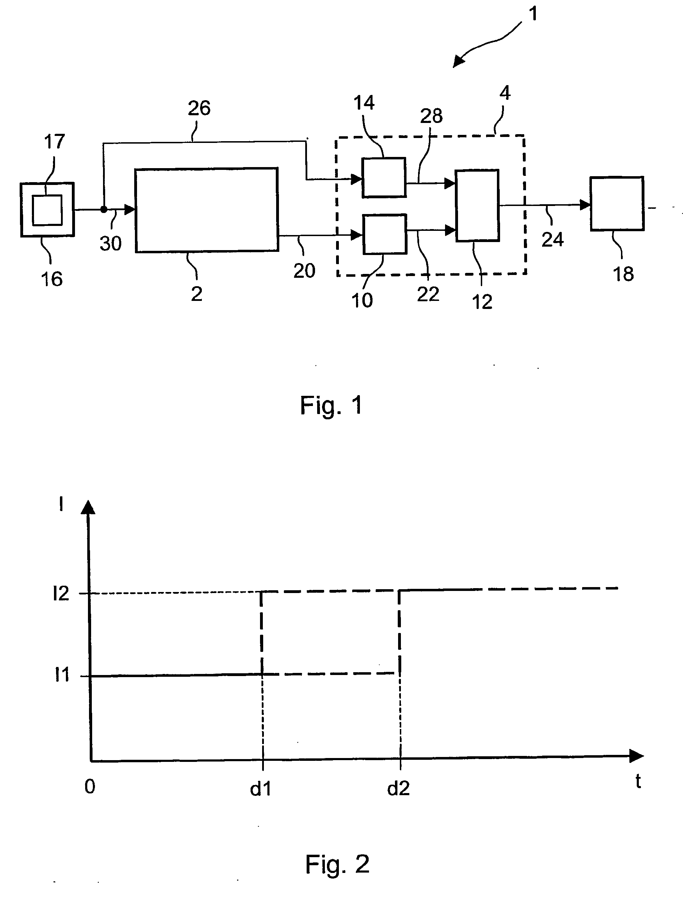

Dans un mode préféré de réalisation représenté sur la figure 1, le dispositif 1 d'alerte sonore d'un aéronef conforme à l'invention comporte des premiers moyens 10 pour surveiller la désactivation d'un pilote automatique de cet aéronef et des seconds moyens 12 d'activation de l'émission d'une alerte sonore dans le cockpit. Les premiers moyens 10 sont reliés à un pilote automatique 2 de l'aéronef par une liaison 20. Le pilote automatique 2 communique son état activé/désactivé à ces premiers moyens 10 par l'intermédiaire de cette liaison 20. Cette liaison peut par exemple être une liaison de données numériques. Ces premiers moyens 10 surveillent l'état du pilote automatique et lorsqu'ils détectent une transition de l'état activé vers l'état désactivé, ils en informent les seconds moyens 12, par exemple par une liaison 22.

Lorsque les seconds moyens 12 reçoivent des premiers moyens 10, l'information de passage du pilote automatique 2 de l'état activé à l'état désactivé, ils activent l'émission d'un premier son d'intensité acoustique I1, à un instant t=0, comme représenté sur la figure 2. Pour cela, ces seconds moyens sont reliés par une liaison 24 à des moyens 1 8 d'émission sonore. dans le cockpit. De préférence, ces derniers comportent au moins un haut-parleur. Les seconds moyens 12 maintiennent ce premier son activé pendant une durée comprise entre une première valeur prédéterminée d1 et une seconde valeur prédéterminée d2. Une fois cette durée écoulée, si l'alerte sonore n'a pas été acquittée (comme indiqué ci-après), les seconds moyens 12 désactivent ledit premier son et activent l'émission, par les moyens 18 d'émission sonore, d'un second son d'intensité acoustique I2 supérieure à l'intensité acoustique I1 du premier son.

Les valeurs d'intensité acoustique dans le cockpit I1 et 12 sont choisies de façon à ce qu'un premier son d'intensité acoustique I1 soit suffisamment audible dans le cockpit par rapport au bruit ambiant présent dans ce cockpit, sans toutefois perturber les pilotes, et de façon à ce qu'un second son d'intensité acoustique 12 attire davantage l'attention des pilotes que le premier son, afin de les inciter à réagir à l'alerte sonore (en acquittant cette alerte) en prenant conscience de la désactivation du pilote automatique.

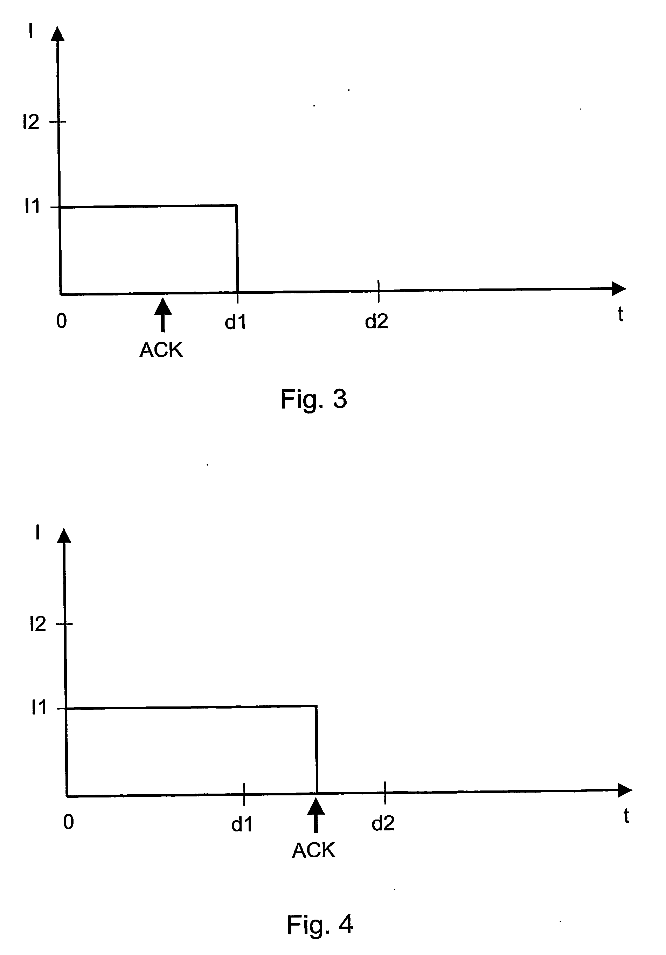

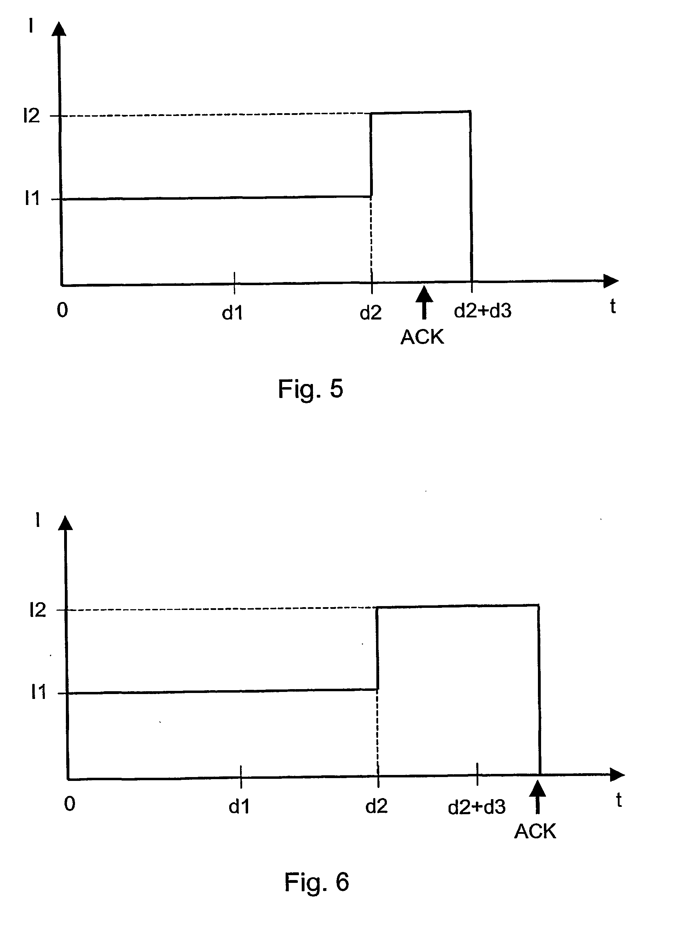

Le dispositif 1 d'alerte sonore comporte en outre des troisièmes moyens 14 pour acquérir une information d'acquittement de l'alerte sonore. Ces troisièmes moyens 14 sont reliés par une liaison 26 à des moyens 16 d'acquittement de cette alerte sonore. Ceux-ci comportent avantageusement un bouton poussoir 17. De préférence, ce bouton poussoir est situé sur le manche ou sur le mini-manche (selon le type d'aéronef) utilisé pour commander les mouvements de l'aéronef. Dans ce cas, il est avantageusement confondu avec le bouton poussoir de désactivation du pilote automatique 2, les moyens 16 d'acquittement étant alors également reliés audit pilote automatique 2 par une liaison 30. Lorsque les troisièmes moyens 14 détectent un appui sur le bouton poussoir 17 des moyens 16 d'acquittement, ils envoient une information d'acquittement aux seconds moyens 12, par exemple par une liaison 28. Si les seconds moyens reçoivent cette information d'acquittement alors qu'ils sont dans un état dans lequel ils activent l'émission d'un premier ou d'un second son, ils prennent en compte cette information d'acquittement afin de désactiver l'émission de ce son comme précisé ci-après :
- Lorsque l'acquittement ACK de l'alerte sonore intervient avant la fin de la durée d1, les seconds moyens 12 maintiennent l'activation dudit premier son jusqu'à la fin de cette durée d1, puis ils désactivent ce premier son, comme représenté sur la figure 3. Dans ce cas, l'émission du second son n'est pas activée ;
- Lorsque l'acquittement ACK de l'alerte sonore intervient après la fin de la durée d1 et avant la fin de la durée d2, les seconds moyens 12 désactivent le premier son sensiblement dès l'instant de cet acquittement, comme représenté sur la figure 4. Dans ce cas, l'émission du second son n'est pas activée ;
- Lorsque aucun acquittement n'est intervenu avant la fin de la durée d2, les seconds moyens 12 désactivent l'émission du premier son et activent l'émission d'un second son à partir de la fin de la durée d2. Dans ce cas :
   . selon une première variante, lorsqu'un acquittement de l'alerte sonore intervient après la fin de ladite durée d2, les seconds moyens désactivent ce second son sensiblement dès l'instant de cet acquittement ;
   . selon une seconde variante, ce second son est maintenu au minimum pendant une troisième durée prédéterminée d3 à partir de la fin de la durée d2. De cette façon, lorsqu'un acquittement ACK de l'alerte sonore intervient avant la fin de ladite durée d3, les seconds moyens 12 maintiennent l'activation dudit second son jusqu'à la fin de cette durée d3, puis ils désactivent ce second son, comme représenté sur la figure 5. Lorsque l'acquittement ACK de l'alerte sonore intervient après la fin de la durée d3, les seconds moyens 12 désactivent ce second son sensiblement dès l'instant de cet acquittement, comme représenté sur la figure 6.

Dans un mode préféré de réalisation de l'invention, la première durée prédéterminée d1 est sensiblement égale à 400 ms, la seconde durée prédéterminée d2 est sensiblement égale à 800 ms et la troisième durée prédéterminée d3 est sensiblement égale à 400 ms.

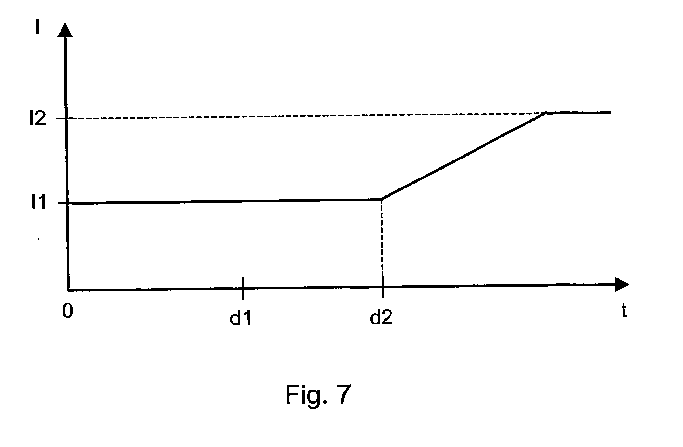

Selon une variante de l'invention, la valeur de l'intensité acoustique correspondant au second son varie progressivement de la valeur I1 de l'intensité acoustique correspondant au premier son (à un instant correspondant à la durée d2) jusqu'à une valeur maximale prédéterminée 12, comme représenté sur la figure 7. Le procédé d'acquittement est quant à lui identique à celui décrit précédemment.

## Revendications

1. Procédé d'alerte sonore lors de la désactivation d'un pilote automatique d'aéronef, ladite alerte sonore requérant d'être acquittée par un pilote de l'aéronef et comprenant un premier son émis dans le cockpit dudit aéronef,
**caractérisé en ce que**, si l'acquittement dudit premier son intervient pendant une première durée prédéterminée (d1) comptée à partir de ladite désactivation du pilote automatique, l'émission dudit premier son est poursuivie jusqu'à la fin de ladite première durée prédéterminée (d1).

2. Procédé selon la revendication 1,
**caractérisé en ce que**, si l'acquittement dudit premier son intervient après la fin de ladite première durée prédéterminée (d1), mais pendant une deuxième durée prédéterminée (d2), plus longue que ladite première durée prédéterminée (d1) et comptée à partir de ladite désactivation du pilote automatique, l'émission dudit premier son est arrêtée sensiblement dès cet acquittement.

3. Procédé selon la revendication 1,
**caractérisé en ce que**, si l'acquittement dudit premier son n'est pas intervenu avant la fin d'une deuxième durée prédéterminée (d2), plus longue que ladite première durée prédéterminée (d1) et comptée à partir de ladite désactivation du pilote automatique, un second son, dont l'intensité acoustique (I2) est supérieure à l'intensité acoustique (I1) dudit premier son, est émis dans ledit cockpit.

4. Procédé selon la revendication 3,
**caractérisé en ce que** l'intensité acoustique dudit second son augmente progressivement du niveau de l'intensité acoustique (I1) dudit premier son jusqu'à une valeur maximale (I2) prédéterminée.

5. Procédé selon l'une des revendications 3 ou 4,
**caractérisé en ce que** ledit second son est arrêté dès son acquittement.

6. Procédé selon l'une des revendications 3 ou 4,
**caractérisé en ce que**, si l'acquittement dudit second son intervient pendant une troisième durée prédéterminée (d3), comptée à partir de la fin de ladite deuxième durée prédéterminée (d2), l'émission dudit second son est poursuivie jusqu'à la fin de ladite troisième durée prédéterminée (d3).

7. Procédé selon l'une des revendications 3 ou 4,
**caractérisé en ce que**, si l'acquittement dudit second son intervient après la fin d'une troisième durée prédéterminée (d3), comptée à partir de la fin de ladite deuxième durée prédéterminée (d2), l'émission dudit son est arrêtée sensiblement dès cet acquittement.

8. Aéronef comportant un pilote automatique (2) susceptible d'être désactivé, mettant en oeuvre le procédé d'alerte sonore selon l'une quelconque des revendications 1 à 7.

## Claims

1. A method for producing an audible warning when an aircraft autopilot is deactivated, said audible warning requiring to be acknowledged by a pilot of the aircraft and comprising a first sound emitted in the cockpit of said aircraft,
**characterized in that**, if the acknowledgement of said first sound occurs during a first predetermined duration (d1) reckoned from the deactivation of the autopilot, the emission of said first sound is continued up to the end of said first predetermined duration (d1).

2. The method as claimed in claim 1,
**characterized in that**, if the acknowledgement of said first sound occurs after the end of said first predetermined duration (d1) but during a second predetermined duration (d2), longer than said first predetermined duration (d1) and reckoned from said deactivation of the autopilot, the emission of said first sound is stopped approximately from said acknowledgement.

3. The method as claimed in claim 1,
**characterized in that**, if the acknowledgement of said first sound does not occur before the end of a second predetermined duration (d2), longer than said first predetermined duration (d1) and reckoned from said deactivation of the autopilot, a second sound, whose acoustic intensity (I2) is greater than the acoustic intensity (I1) of said first sound, is emitted in the cockpit.

4. The method as claimed in claim 3,
**characterized in that** the acoustic intensity of said second sound varies gradually from the value of the acoustic intensity (I1) of said first sound up to a predetermined maximum value (I2).

5. The method as claimed in one of claims 3 or 4,
**characterized in that** said second sound is stopped as soon as it is acknowledged.

6. The method as claimed in one of claims 3 or 4,
**characterized in that**, if the acknowledgement of said second sound occurs during a third predetermined duration (d3), reckoned from the end of said second predetermined duration (d2), the emission of said second sound is continued up to the end of said third predetermined duration (d3).

7. The method as claimed in one of claims 3 or 4,
**characterized in that**, if the acknowledgement of said second sound occurs after the end of a third predetermined duration (d3), reckoned from the end of said second predetermined duration (d2), the emission of said second sound is stopped approximately as soon as it is acknowledged.

8. An aircraft comprising an autopilot (2) capable of being deactivated with implementation of an audible warning method as claimed in any one of claims 1 to 7.

## Patentansprüche

1. Verfahren zur akustischen Anzeige bei der Deaktivierung eines Autopiloten eines Luftfahrzeugs, wobei die besagte akustische Anzeige durch einen Piloten des Luftfahrzeugs quittiert werden muss und einen ersten Ton umfasst, der im Cockpit des besagten Luftfahrzeugs ausgegeben wird,
**dadurch gekennzeichnet, dass**, wenn die Quittierung des besagten ersten Tones innerhalb eines ersten vorbestimmten Zeitfensters (d1) erfolgt, das ab der besagten Deaktivierung des Autopiloten gezählt wird, die Ausgabe des besagten ersten Tones bis zum Ende des besagten ersten vorbestimmten Zeitfensters (d1) fortgesetzt wird.

2. Verfahren nach Anspruch 1,
**dadurch gekennzeichnet, dass**, wenn die Quittierung des besagten ersten Tones nach dem Ende des ersten vorbestimmten Zeitfensters (d1), jedoch während eines zweiten vorbestimmten Zeitfensters (d2) erfolgt, das größer als das besagte erste vorbestimmte Zeitfenster (d1) ist, und ab der besagten Deaktivierung des Autopiloten gezählt wird, die Ausgabe des besagten ersten Tones in etwa ab dieser Quittierung abgeschaltet wird.

3. Verfahren nach Anspruch 1,
**dadurch gekennzeichnet, dass**, wenn die Quittierung des besagten ersten Tones nicht vor dem Ende eines zweiten vorbestimmten Zeitfensters (d2) erfolgt ist, das größer als das besagte erste vorbestimmten Zeitfenster (d1) ist, und ab der besagten Deaktivierung des Autopiloten gezählt wird, im Cockpit ein zweiter Ton ausgegeben wird, dessen Schallstärke (12) größer ist, als die Schallstärke (I1) des besagten ersten Tones.

4. Verfahren nach Anspruch 3,
**dadurch gekennzeichnet, dass** die Schallstärke des besagten zweiten Tones progressiv vom Niveau der Schallstärke (I1) des besagten ersten Tones bis zu einem vorbestimmten maximalen Wert (12) ansteigt.

5. Verfahren nach einem der Ansprüche 3 oder 4,
**dadurch gekennzeichnet, dass** der besagte zweite Ton sofort nach seiner Quittierung abgestellt wird.

6. Verfahren nach einem der Ansprüche 3 oder 4,
**dadurch gekennzeichnet, dass**, wenn die Quittierung des besagten zweiten Tones innerhalb eines vorbestimmten Zeitfensters (d3) erfolgt, das ab dem Ende des besagten zweiten Zeitfensters (d2) gezählt wird, die Ausgabe des besagten zweiten Tones bis zum Ende des besagten dritten vorbestimmten Zeitfensters (d3) fortgesetzt wird.

7. Verfahren nach einem der Ansprüche 3 oder 4,
**dadurch gekennzeichnet, dass**, wenn die Quittierung des besagten zweiten Tones nach dem Ende eines dritten vorbestimmten Zeitfensters (d3) erfolgt, das ab dem Ende des besagten zweiten Zeitfensters (d2) gezählt wird, die Ausgabe des besagten Tones in etwa ab dieser Quittierung abgeschaltet wird.

8. Luftfahrzeug umfassend einen Autopiloten (2), der imstande ist, deaktiviert zu werden, und der das Verfahren zur akustischen Anzeige nach irgendeinem der Ansprüche 1 bis 7 anwendet.
